# EUROPÄISCHE PATENTSCHRIFT

(11) **EP 2 108 257 B1**
(45) Veröffentlichungstag und Bekanntmachung des Hinweises auf die Patenterteilung: **05.01.2011**
(21) Anmeldenummer: 09004855.4
(22) Anmeldetag: 02.04.2009
(51) Int. Cl.: A01M 21/00, B05B 7/04, B05B 7/24

(54) **Sprühgerät**
Spray device
Pulvérisateur

(30) Priorität: 09.04.2008 DE 102008017860
(43) Veröffentlichungstag der Anmeldung: 14.10.2009
(73) Patentinhaber: Andreas Stihl AG & Co. KG, 71336 Waiblingen (DE)
(72) Erfinder: Wiedmann, Hans-Georg, 71522 Backnang (DE); Stark, Thomas, 71336 Waiblingen (DE)
(74) Vertreter: Wasmuth, Rolf

(56) Entgegenhaltungen:
- EP-A- 1 886 613
- FR-A- 1 220 888
- US-A- 5 415 351

## Beschreibung

Die Erfindung betrifft ein Sprühgerät der im Oberbegriff des Anspruchs 1 angegebenen Gattung.

Sprühgeräte, die einem Trägerluftstrom Sprühmittel zuführen, sind bekannt. Um die zugeführte Sprühmittelmenge zu regulieren, sind Dosierventile bekannt, die vom Bediener von Hand in unterschiedliche Dosierstellungen gestellt werden können, um so die zugeführte Sprühmittelmenge einzustellen. Die Dosieröffnungen sind vergleichsweise kleine Öffnungen.

Sprühmittelbehälter besitzen üblicherweise eine Einfüllöffnung zum Einfüllen von Sprühmittel. Um den Sprühmittelbehälter zu Entleeren, muss das Sprühgerät gedreht und das Sprühmittel durch die üblicherweise oben liegend angeordnete Einfüllöffnung ausgegossen werden.

Aus der US 5,415,351 ist eine Druckluftsprühpistole bekannt, bei der die Druckluft das Sprühmittel durch eine Öffnung drückt. Zur Anpassung des gesprühten Musters können unterschiedlich große Austrittsöffnungen eingestellt werden. Bei der FR 1 220 888 ist ein rückengetragenes Sprühgerät vorgesehen, das ein Dosierventil für das Sprühmittel besitzt. Das Dosierventil ist in der Sprühmittelleitung angeordnet und besitzt einen Schieber, mit dem zwei unterschiedliche Durchtrittsquerschnitte für das Sprühmittel eingestellt werden können. Beide Öffnungen sind vergleichsweise klein ausgebildet.

Der Erfindung liegt die Aufgabe zugrunde, ein Sprühgerät der gattungsgemäßen Art zu schaffen, dessen Sprühmittelbehälter einfach entleert werden kann.

Durch die Entleeröffnung am Dosierventil kann auf einfache Weise eine Entleerung des Sprühmittelbehälters erfolgen, ohne dass zusätzliche Einrichtungen benötigt werden. Beispielsweise kann eine im Boden des Sprühmittelbehälters angeordnete Entleeröffnung entfallen. Dadurch, dass der Strömungsquerschnitt der Entleeröffnung deutlich größer als der Strömungsquerschnitt der größten Dosieröffnung ist, kann auch eine vergleichsweise große Restsprühmittelmenge im Sprühbehälter in kurzer Zeit entleert werden.

Um eine gute Dosierung der zugeführten Sprühmittelmenge zu erlauben, sind mehrere Dosieröffnungen vorgesehen, die unterschiedliche Strömungsquerschnitte besitzen. Der Bediener kann den für die jeweilige Anwendung zweckmäßigen Strömungsquerschnitt durch Auswahl der geeigneten Dosieröffnung einstellen. Vorteilhaft beträgt der Strömungsquerschnitt der Entleeröffnung mindestens das Doppelte des Strömungsquerschnitts der größten Dosieröffnung. Der Strömungsquerschnitt der Entleeröffnung beträgt mindestens das 20fache des Strömungsquerschnitts der kleinsten Dosieröffnung. Der Strömungsquerschnitt der Entleeröffnung ist damit deutlich größer als die bei den Dosieröffnungen im Betrieb zum Einsatz kommenden Strömungsquerschnitte. Die Strömungsquerschnitte der Dosieröffnungen liegen im Bereich von etwa 0,1 mm² bis etwa 15 mm², während die Entleeröffnung einen Strömungsquerschnitt von mindestens 30 mm² besitzt.

Es ist vorgesehen, dass die Entleeröffnung mit dem Inneren des Blasrohrs verbunden ist. Beim Entleeren des Sprühmittelbehälters kann der Bediener das Blasrohr nach unten geneigt halten, so dass das Sprühmittel aus dem Blasrohr beispielsweise in einen geeigneten bereitgestellten Auffangbehälter geleitet werden kann. Ein unbeabsichtigtes Verschütten von Sprühmittel kann dadurch, dass das Sprühmittel ins Innere des Blasrohrs geleitet wird, auf einfache Weise vermieden werden. Dadurch, dass sowohl die Dosieröffnungen als auch die Entleeröffnungen mit dem Inneren des Blasrohrs verbunden sind, ergibt sich ein einfacher konstruktiver Aufbau des Dosierventils. Es kann jedoch auch vorteilhaft sein, wenn die Entleeröffnung außerhalb des Blasrohrs ausmündet. Aus dem Sprühmittelbehälter entleertes Sprühmittel wird dadurch nicht ins Innere des Blasrohrs geleitet, sondern direkt in die Umgebung, wo es mit geeigneten Behältnissen oder dgl. aufgefangen werden kann. Der benötigte große Strömungsquerschnitt der Entleeröffnung lässt sich auch bei geringer Baugröße des Dosierventils auf einfache Weise realisieren, wenn die Dosieröffnung einen runden und die Entleeröffnung einen rechteckigen Strömungsquerschnitt aufweist.

Eine einfache konstruktive Gestaltung des Dosierventils ergibt sich, wenn das Dosierventil einen Stutzen aufweist, der in einer Aufnahme des Dosierventils drehbar gelagert ist und dieser mindestens eine Dosieröffnung und die mindestens eine Entleeröffnung aufweist. Durch Drehen des Stutzens des Dosierventils kann die ausgewählte Dosieröffnung oder die Entleeröffnung eingestellt werden. Insbesondere bei Dosieröffnungen mit sehr kleinem Strömungsquerschnitt ist vorgesehen, dass die Dosieröffnung einen Eintrittsabschnitt mit einem vergrößerten Strömungsquerschnitt aufweist. Dadurch kann bei ausreichender Wandstärke des Stutzens eine sehr dünne, lange Dosieröffnung, die zu einer unerwünscht hohen Drosselwirkung führen würde, vermieden werden. Der Eintrittsabschnitt grenzt dabei vorteilhaft an den Außenumfang des Stutzens an. Der Eintrittsabschnitt kann dadurch auf einfache Weise beispielsweise als Bohrung oder bei der Herstellung des Stutzens aus Kunststoff in einem Spritzgussverfahren durch einen nach außen ziehbaren Kern hergestellt werden.

Vorteilhaft ist die Sprühmittelleitung mit einer Mündungsöffnung am Außenumfang des Stutzens verbunden. Der Stutzen ist zweckmäßig hohl ausgebildet. Das Innere des Stutzens mündet vorteilhaft ins Blasrohr, so dass die Sprühmittelleitung über die in der Wand des Stutzens angeordnete ausgewählte Öffnung mit dem Inneren des Blasrohrs verbunden ist.

Um den Trägerluftstrom des Sprühmittels möglicht zentral und gleichmäßig zuzuführen, ist vorgesehen, dass das Blasrohr auf der Höhe des Dosierventils eine Zuführrippe aufweist, die sich quer zur Längsmittelachse des Blasrohrs durch das Blasrohr erstreckt. Vorteilhaft weist die Zuführrippe mindestens eine Zuführöffnung auf, die mit dem Inneren des Stutzens verbunden ist und die ins Innere des Blasrohrs mündet. Die Zuführöffnung ist dabei vorteilhaft so angeordnet, dass das Sprühmittel etwa zentral und gleichmäßig in den Trägerluftstrom eingebracht wird. Zweckmäßig ist im Bereich der Zuführrippe mindestens eine Strömungsleitrippe im Blasrohr angeordnet, die sich etwa konzentrisch um die Längsmittelachse des Blasrohrs erstreckt. Dadurch kann im Bereich der Zuführrippe eine gleichmäßige Strömung des Luftstroms erreicht werden. Gleichzeitig können durch geeignete Gestaltung der Strömungsleitrippe Düseneffekte erzeugt werden, die die Verteilung des Sprühmittels in dem Trägerluftstrom unterstützen.

Das Dosierventil ist vorteilhaft benachbart zu einer Ausblasöffnung aus dem Blasrohr angeordnet. Das Dosierventil kann dadurch in unmittelbarer räumlicher Nähe zur Zuführöffnung angeordnet werden.

Es ist vorgesehen, dass am Blasrohr ein Handgriff angeordnet ist, der mindestens ein Bedienelement zum Bedienen des Sprühgeräts aufweist. Zweckmäßig ist im Bereich des Handgriffs in der Sprühmittelleitung ein Ventil angeordnet, mit dem die Zufuhr von Sprühmittel zu dem Dosierventil unterbrochen werden kann. Das Ventil kann dabei vorteilhaft durch den Bediener vom Handgriff aus zu betätigen sein. Es kann auch vorgesehen sein, dass das Ventil durch die Motorsteuerung des Antriebsmotors betätigt werden kann.

Zur Förderung von Sprühmittel ist vorgesehen, dass in der Sprühmittelleitung eine Sprühmittelpumpe angeordnet ist. Die Sprühmittelleitung kann dabei aus mehreren Abschnitten bestehen, die stromab und stromauf der Sprühmittelpumpe angeordnet sind. Die Sprühmittelpumpe ist vorteilhaft von dem Antriebsmotor des Sprühgeräts angetrieben. Es kann jedoch auch vorgesehen sein, dass das Sprühgerät keine Sprühmittelpumpe aufweist und Sprühmittel beispielsweise aufgrund der Schwerkraft gefördert wird. Das Sprühgerät ist insbesondere ein rückengetragenes Sprühgerät.

Ausführungsbeispiele der Erfindung werden im Folgenden anhand der Zeichnung erläutert. Es zeigen:
- Fig. 1: eine schematische Seitenansicht eines Blas- geräts,
- Fig. 2: einen Schnitt durch das Blasrohr des Blas- geräts aus Fig. 1 im Bereich des Dosier- ventils,
- Fig. 3 und Fig. 4: perspektivische Darstellungen des Dosier- aufsatzes des Sprühgeräts aus Fig. 1,
- Fig. 5: das Dosierelement des Dosierventils in perspektivischer Darstellung,
- Fig. 6 und Fig. 7: Schnittdarstellungen durch das Dosier- element aus Fig. 5,
- Fig. 8: einen Schnitt entlang der Linie VIII-VIII in Fig. 7,
- Fig. 9: eine perspektivische Darstellung eines Ausführungsbeispiels eines Dosierelements,
- Fig. 10: eine Draufsicht auf das Dosierelement aus Fig. 9,
- Fig. 11: eine Ansicht von unten auf das Dosier- element aus Fig. 9,
- Fig. 12: einen Schnitt entlang der Linie XII-XII in Fig. 11,
- Fig. 13: einen Schnitt entlang der Linie XIII-XIII in Fig. 11,
- Fig. 14: eine vergrößerte Schnittdarstellung entlang der Linie XIV-XIV in Fig. 13,
- Fig. 15: eine perspektivische Darstellung eines Ausführungsbeispiels eines Dosierelements,
- Fig. 16: eine Draufsicht auf das Dosierelement aus Fig. 15,
- Fig. 17: eine Ansicht von unten auf das Dosier- element aus Fig. 15,
- Fig. 18: einen Schnitt entlang der Linie XVIII-XVIII in Fig. 17,
- Fig. 19: einen Schnitt entlang der Linie XIX-XIX in Fig. 17,
- Fig. 20: einen Schnitt entlang der Linie XX-XX in Fig. 19.

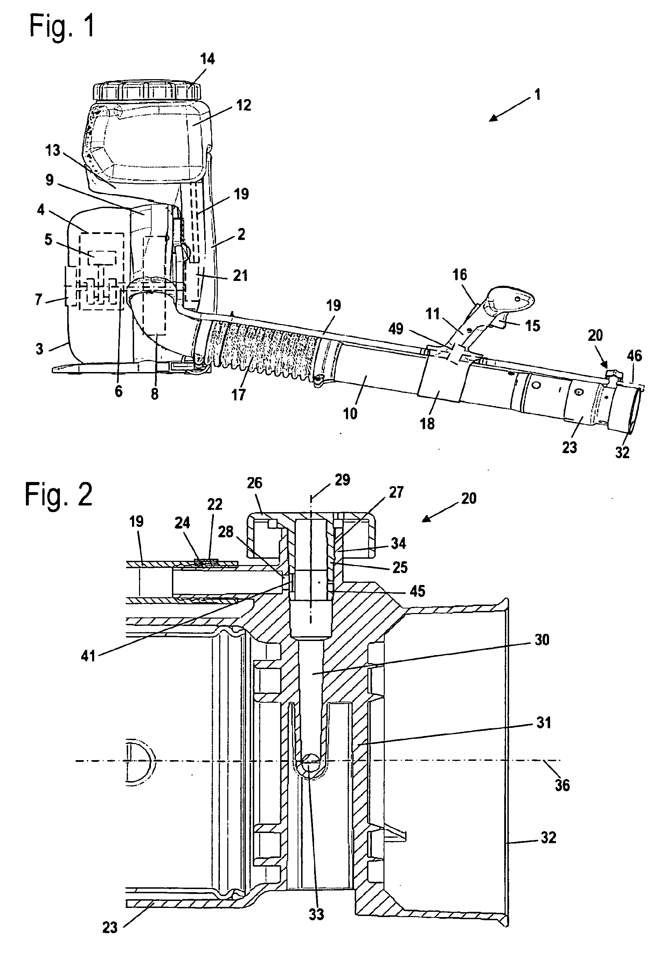

Fig. 1 zeigt ein Sprühgerät 1, das als rückengetragenes Sprühgerät ausgebildet ist. Das Sprühgerät 1 besitzt eine Rückentrage 2, die vom Bediener mit nicht gezeigten Schultergurten auf dem Rücken getragen werden kann. An der Rückentrage 2 ist ein Gehäuse 3 des Sprühgeräts 1 festgelegt, in dem ein Antriebsmotor 4 angeordnet ist. Das Gehäuse 3 umfasst eine Gebläsespirale 9. Der Antriebsmotor 4 ist im Ausführungsbeispiel als Verbrennungsmotor ausgebildet und besitzt einen Kolben 5, der eine Kurbelwelle 6 rotierend antreibt. Zum Starten des Antriebsmotors 4 ist eine Starteinrichtung 7 vorgesehen, die beispielsweise als von Hand zu startender Seilzugstarter oder als elektrisch betätigte Starteinrichtung ausgeführt sein kann. In der Gebläsespirale 9 ist ein Gebläserad 8 angeordnet, das einen Trägerluftstrom in ein an der Gebläsespirale 9 angeschlossenes Blasrohr 10 fördert. Der Trägerluftstrom dient zum Austrag von Sprühmittel, das dem Trägerluftstrom zugeführt wird. Der Antriebsmotor 4 treibt außerdem vorteilhaft eine Sprühmittelpumpe 21 an, die in Fig. 1 schematisch gezeigt ist. Der Antriebsmotor 4 kann vorteilhaft ein Zweitaktmotor oder gemischgeschmierter Viertaktmotor sein.

Der Antriebsmotor 4 kann jedoch auch ein Elektromotor sein.

Das Blasgerät 1 besitzt einen Sprühmittelbehälter 12, der mit einem Träger 13 am Rückenteil der Rückentrage 3 festgelegt ist. An seiner Oberseite besitzt der Sprühmittelbehälter 12 einen Deckel 14, der eine nicht gezeigte Einfüllöffnung in den Sprühmittelbehälter 12 verschließt. Aus dem Sprühmittelbehälter 12 führt eine Sprühmittelleitung 19, in der auch die Sprühmittelpumpe 21 angeordnet ist. Die Sprühmittelleitung 19 kann dabei einen stromauf der Sprühmittelpumpe 21 zwischen Sprühmittelbehälter 12 und Sprühmittelpumpe 21 angeordneten ersten Abschnitt sowie einen weiteren Abschnitt aufweisen, der die Sprühmittelpumpe 21 mit einem Dosierventil 20 verbindet.

Das Dosierventil 20 ist an einem Dosieraufsatz 23 des Blasrohrs 10 benachbart zu einer Ausblasöffnung 32 des Blasrohrs 10 angeordnet. Benachbart zur Gebläsespirale 9 besitzt das Blasrohr 10 einen elastischen Abschnitt 17, der beispielsweise nach Art eines Faltenbalgs ausgebildet sein kann und der ein Hin- und Herschwenken des Blasrohrs 10 im Betrieb ermöglicht. Am Blasrohr 10 ist ein Handgriff 11 zum Führen des Blasrohrs 10 festgelegt. Der Handgriff 11 ist dabei über eine Manschette 18 am Blasrohr 10 festgelegt. Der Handgriff 11 besitzt zum Bedienen des Antriebsmotors 4 einen Gashebel 15 sowie eine Gashebelsperre 16. Es können auch weitere Bedienelemente am Handgriff 11 vorgesehen sein, beispielsweise ein Stoppschalter zum Ausschalten des Antriebsmotors 4. Im Bereich des Handgriffs 11 ist ein Ventil 49 in der Sprühmittelleitung 19 angeordnet, das vorteilhaft als Schaltventil ausgebildet ist und mit dem die Zufuhr von Sprühmittel zum Dosierventil 20 unterbrochen werden kann. Am Handgriff 11 kann ein Bedienelement zur Betätigung des Ventils 49 vorgesehen sein. Im Bereich des Ventils 49 ist die Sprühmittelleitung 19 vorteilhaft unterbrochen.

Fig. 2 zeigt die Gestaltung des Dosierventils 20. Im Bereich des Dosierventils 20 besitzt der Dosieraufsatz 23 einen Anschlussstutzen 24, auf den die Sprühmittelleitung 19, die beispielsweise als elastischer Schlauch ausgebildet sein kann, aufgeschoben ist. Die Sprühmittelleitung 19 ist auf dem Anschlussstutzen 24 vorteilhaft über eine Spannschelle 22 oder dgl. fixiert. Der Dosieraufsatz 23 besitzt einen radial zur Längsmittelachse 36 des Blasrohrs 10 ausragenden zylindrischen Abschnitt 34, der eine Aufnahme 27 für ein Dosierelement 25 des Dosierventils 20 begrenzt. Die Sprühmittelleitung 19 ist über den Anschlussstutzen 24 mit einer Mündungsöffnung 28 verbunden, die an der Aufnahme 27 mündet. Das Dosierelement 25 besitzt ein Bedienrad 26, mit dem das Dosierelement 25 um eine Drehachse 29 drehbar ist. Die Drehachse 29 entspricht der Längsmittelachse der Aufnahme 27. Das Dosierelement 25 besitzt einen Stutzen 45, der in der Aufnahme 27 angeordnet ist und der als hohler Zylinder ausgeführt ist. In der in Fig. 2 gezeigten Drehstellung des Dosierelements 25 ist benachbart zur Mündungsöffnung 28 eine Dosieröffnung 41 angeordnet, über die die Sprühmittelleitung 19 mit dem Inneren des Stutzens 45 verbunden ist. Das Innere des Stutzens 45 ist über einen Zuführkanal 30 mit Zuführöffnungen 33 verbunden, die ins Innere des Blasrohrs 10 münden. Der Zuführkanal 30 ist in einer Zuführrippe 31 ausgebildet.

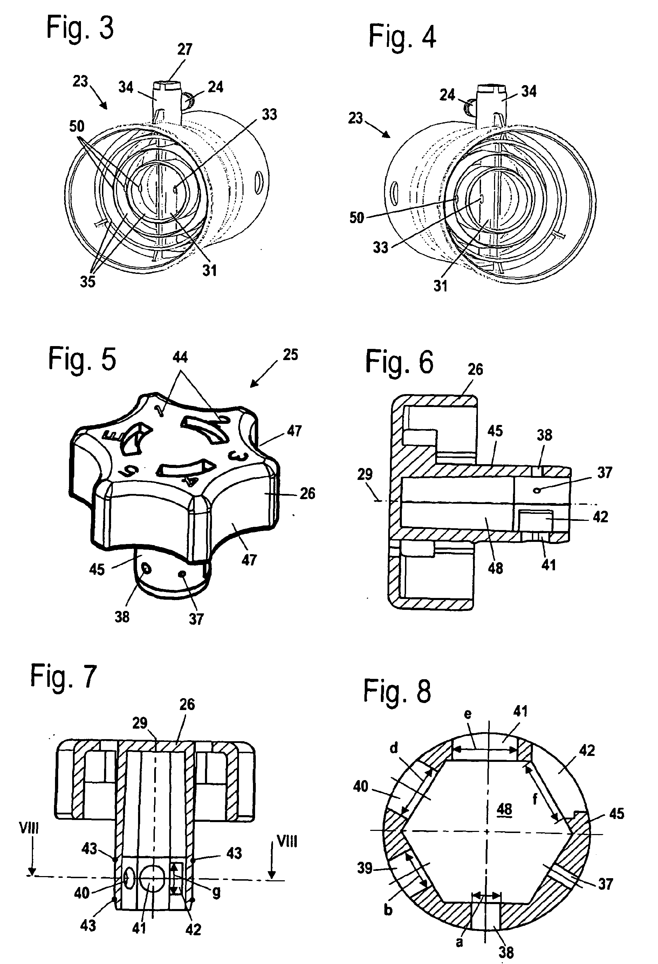

Die Gestaltung der Zuführrippe 31 ist in den Fig. 3 und 4 gezeigt. Die Zuführrippe 31 erstreckt sich über den gesamten Durchmesser des Dosieraufsatzes 23 des Blasrohrs 10 und besitzt etwa auf der Höhe der Längsmittelachse 36 des Blasrohrs 10 (Fig. 2) an jeder Längsseite eine Zuführöffnung 33. Es können auch mehrere Zuführöffnungen 33 vorgesehen sein, die in Längsrichtung der Zuführrippe 31 oder in Richtung der Längsmittelachse 36 zueinander versetzt sind. An der Zuführrippe 31 sind insgesamt drei Strömungsleitrippen 35 vorgesehen, die als konzentrisch zur Längsmittelachse 36 angeordnete Zylinderabschnitte ausgebildet sind. Die Strömungsleitrippen 35 weisen Öffnungen 50 auf, durch die Sprühmittel radial nach außen gelangen kann. Über die Zuführöffnungen 33 wird dem im Blasrohr 10 strömenden Trägerluftstrom Sprühmittel zugeführt.

Die Fig. 6 bis 8 zeigen das Dosierelement 25 im Einzelnen. Wie Fig. 5 zeigt, sind am Außenumfang des Bedienrads 26 insgesamt sechs Vertiefungen 47 über den Umfang verteilt angeordnet, die das Greifen und Verdrehen des Bedienrads 26 erleichtern und ein Abrutschen des Bedieners vom Bedienrad 26 verhindern. An der dem Blasrohr 10 abgewandten Oberseite des Bedienrads 26 sind Markierungen 44 vorgesehen, die Drehstellungen des Dosierelements 25 markieren. Fünf der Drehstellungen sind mit Ziffern von 1 bis 5 markiert, die für die unterschiedlichen Dosieröffnungen stehen. Eine sechste Markierung 44, die mit "E" gekennzeichnet ist, markiert die Entleerstellung des Dosierelements 25.

Wie die Fig. 6 bis 8 zeigen, besitzt der Stutzen 45 fünf Dosieröffnungen 37, 38, 39, 40, 41 und eine Entleeröffnung 42. Die Dosieröffnungen 37 bis 41 besitzen jeweils einen kreisförmigen Querschnitt. Die Dosieröffnung 37 besitzt einen Durchmesser a, der beispielsweise etwa 1 mm betragen kann. Eine zweite, benachbart zur Dosieröffnung 37 angeordnete Dosieröffnung 38 besitzt einen etwas größeren Durchmesser b, der beispielsweise etwa 1,6 mm betragen kann. Eine dritte, benachbart zur zweiten Dosieröffnung 38 angeordnete Dosieröffnung 39 besitzt einen Durchmesser c, der etwas größer als der Durchmesser b ist und beispielsweise etwa 2 mm betragen kann. Eine vierte Dosieröffnung 40, die benachbart zur Dosieröffnung 39 am Umfang des Stutzens 45 angeordnet ist, besitzt einen Durchmesser d, der etwas größer als der Durchmesser c ist und beispielsweise etwa 3 mm betragen kann. Eine fünfte Dosieröffnung 41, die zwischen der Dosieröffnung 40 und der Entleeröffnung 42 angeordnet ist, besitzt einen Durchmesser e, der größer als der Durchmesser d ist. Der Durchmesser e kann beispielsweise etwa 4 mm betragen. Damit ergibt sich für die kleinste Dosieröffnung 37 ein freier Strömungsquerschnitt von etwa 0,8 mm² und für die größte Dosieröffnung 41 ein freier Strömungsquerschnitt von etwa 12,5 mm².

Die Entleeröffnung 42 besitzt einen rechteckigen Querschnitt mit einer etwa in Umfangsrichtung gemessenen Breite f und einer parallel zur Drehachse 29 gemessenen Höhe g. Der freie Strömungsquerschnitt der Entleeröffnung 42 beträgt vorteilhaft mehr als 30 mm², insbesondere zwischen etwa 30 mm² und etwa 40 mm². Damit beträgt der Strömungsquerschnitt der Entleeröffnung 42 deutlich mehr als das Doppelte, vorteilhaft mindestens das 2,5 fache bis 3fache des Strömungsquerschnitts der größten Dosieröffnung 41. Alle Dosieröffnungen 37 bis 41 und die Entleeröffnung 42 sind auf einer Höhe am Umfang des Stutzens 45 angeordnet. In axialer Richtung benachbart zu den Dosieröffnungen 37 bis 41 und zur Entleeröffnung 42 sind am Stutzen 45 die in Fig. 7 gezeigten Rastzapfen 43 angeordnet, mit denen das Dosierelement 25 in entsprechende, nicht gezeigte Umfangsnuten der Aufnahme 27 eingreift und so das Dosierelement 25 in Richtung der Drehachse 29 fixiert. Wie insbesondere Fig. 8 zeigt, münden alle Dosieröffnungen 37 bis 41 und die Entleeröffnung 42 in einen Innenraum 48 des Stutzens 45, der im Ausführungsbeispiel einen sechseckigen Querschnitt aufweist. Es können jedoch auch andere Querschnitte für den Innenraum 48 vorteilhaft sein. Dadurch sind sowohl die Dosieröffnungen 37 bis 41 als auch die Entleeröffnung 42 mit dem Inneren des Blasrohrs 10 verbunden.

Es kann jedoch auch vorgesehen sein, dass die Entleeröffnung 42 außerhalb des Blasrohrs 10 in die Umgebung ausmündet. Hierzu kann der in Fig. 1 gestrichelt gezeigte Leitungsabschnitt 46 vorgesehen sein, der am Dosierventil 20 angeschlossen ist und der oberhalb der Ausblasöffnung 32 des Blasrohrs 10 in die Umgebung ausmündet. Zur Verbindung der Entleeröffnung 42 mit dem Leitungsabschnitt 46 kann der Stutzen 45 eine den Stutzen 45 durchquerende Leitungsverbindung zwischen der Entleeröffnung 42 und einer mit dem Leitungsabschnitt 46 verbundenen Öffnung aufweisen. Auch andere konstruktive Gestaltungen können vorteilhaft sein.

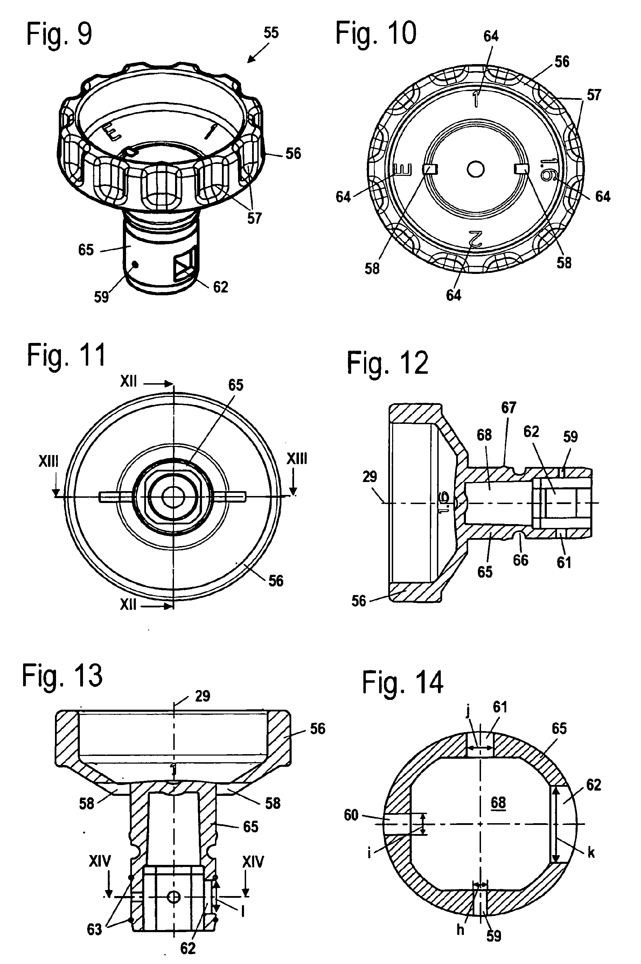

Die Fig. 9 bis 14 zeigen ein Ausführungsbeispiel eines Dosierelement 55, dessen Aufbau im Wesentlichen dem des Dosierelements 25 entspricht und das anstatt des Dosierelements 25 in der Aufnahme 27 angeordnet sein und somit ein Dosierventil 20 bilden kann. Das Dosierelement 55 besitzt ein Bedienrad 56 mit einem nach außen hochstehenden Rand, in den eine Vielzahl von Vertiefungen 57 eingebracht sind. Dies erleichtert das Greifen und Drehen des Bedienrads 56.

Wie Fig. 10 zeigt, sind am Bedienrad 56 insgesamt vier Markierungen 64 vorgesehen, die unterschiedliche Stellungen des Dosierelements 55 kennzeichnen. Die Markierung "E" markiert dabei die Entleerposition des Dosierelements 55, während die Markierungen "1", "1.6" und "2" Dosierpositionen kennzeichnen, wobei die Ziffer jeweils den Durchmesser der zugeordneten Dosieröffnung bezeichnet. Das Dosierelement 55 besitzt am Bedienrad 56 zwei einander gegenüberliegend angeordnete Ablauföffnungen 58, über die an der Oberseite des Bedienrads 56 angesammelte Flüssigkeit ablaufen kann. Es kann vorgesehen sein, dass das Dosierelement 55 Rastmittel aufweist, die Rastpositionen des Dosierelements 55 festlegen. In jeder Rastposition ist vorteilhaft eine Dosieröffnung oder Entleeröffnung an der Mündungsöffnung 28 (Fig. 2) angeordnet.

Wie die Fig. 11 bis 14 zeigen, besitzt das Dosierelement 55 einen Stutzen 65, der zylindrisch ausgebildet ist und einen Innenraum 68 begrenzt. Am Außenumfang des Stutzens 56 ist ein umlaufender Rastrand 67 angeordnet. Zusätzlich sind die in Fig. 13 gezeigten Rastzapfen 63 vorgesehen. Diese Elemente dienen zur Fixierung des Dosierelements 55 in der Aufnahme 27 in Richtung der Drehachse 29. Der Stutzen 65 besitzt außerdem eine umlaufende Nut 66, die zur Aufnahme einer nicht gezeigten Dichtung dient.

Wie Fig. 14 zeigt, besitzt der Stutzen 65 eine erste Dosieröffnung 59 mit einem Durchmesser h, der etwa 1 mm betragen kann. Die Dosieröffnung 59 liegt an der Mündungsöffnung 28 an, wenn die Markierung "1" zum Anschlussstutzen 24 weist. Es ist eine zweite Dosieröffnung 60 mit einem Durchmesser i vorgesehen, der größer als der Durchmesser h ist und beispielsweise etwa 1,6 mm betragen kann. Eine dritte Dosieröffnung 61 ist benachbart zur Dosieröffnung 60 und gegenüberliegend zur Dosieröffnung 59 angeordnet und besitzt einen Durchmesser j, der etwas größer als der Durchmesser i ist. Der Durchmesser j kann beispielsweise etwa 2 mm betragen. Am Umfang zwischen der ersten Dosieröffnung 59 und der dritten Dosieröffnung 61 und gegenüberliegend zur zweiten Dosieröffnung 60 ist eine Entleeröffnung 62 vorgesehen, die einen rechteckigen Querschnitt besitzt. Die Entleeröffnung 62 besitzt eine Breite k, die deutlich größer als der Durchmesser j der größten Dosieröffnung 61 ist. Wie Fig. 13 zeigt, besitzt die Dosieröffnung 62 eine Höhe 1, die ebenfalls größer als der Durchmesser j der Dosieröffnung 61 ist. Dadurch ergibt sich für die Entleeröffnung 62 ein Strömungsquerschnitt, der deutlich größer, vorteilhaft mindestens doppelt so groß und insbesondere mindestens drei Mal so groß wie der Strömungsquerschnitt der größten Dosieröffnung 61 ist. Der Strömungsquerschnitt der Entleeröffnung 62 beträgt vorteilhaft mehr als 30 mm², insbesondere mehr als 35 mm².

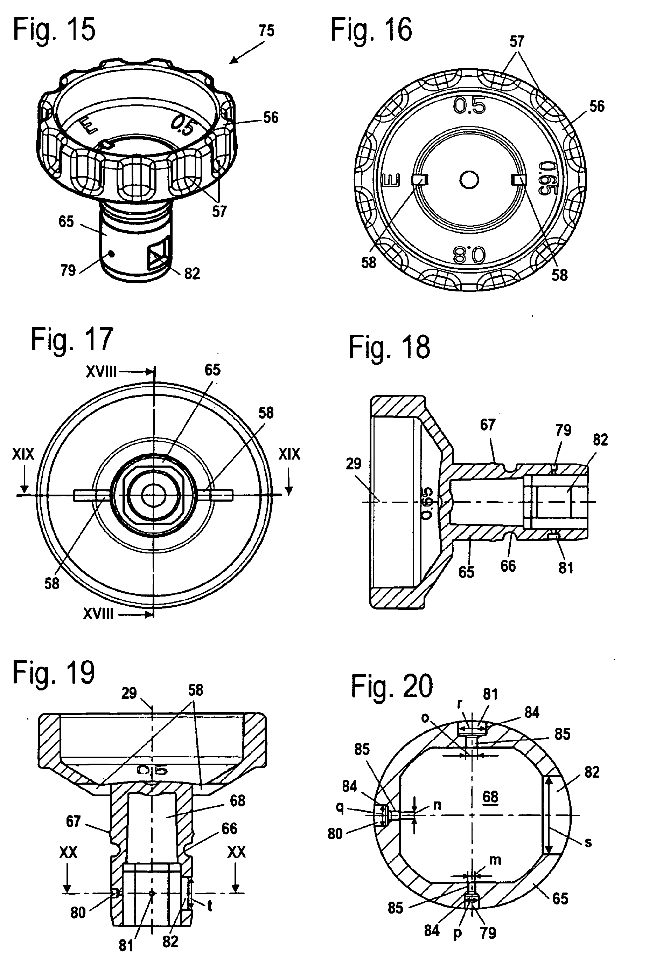

Die Fig. 15 bis 20 zeigen ein weiteres Ausführungsbeispiel eines Dosierelements 75, das anstatt des Dosierelements 25 in der Aufnahme 27 des Dosierventils 20 angeordnet werden kann. Das Dosierventil 75 entspricht im Wesentlichen der Gestaltung des Dosierventils 65. Gleiche Bezugszeichen kennzeichnen in allen Figuren einander entsprechende Elemente. Das Dosierventil 75 besitzt einen Stutzen 65, der Dosieröffnungen 79 bis 81 sowie eine Entleeröffnung 82 aufweist. Wie Fig. 19 zeigt, sind am Stutzen 65 des Dosierelements 75 keine Rastzapfen 63 vorgesehen. Allerdings ist ein Rastrand 67 zur axialen Fixierung vorgesehen.

Die Dosieröffnungen 79 bis 81 besitzen jeweils einen Eintrittsabschnitt 84 mit einem vergrößerten Durchmesser, sowie einen Drosselabschnitt 85 mit einem verkleinerten Durchmesser. Die erste Dosieröffnung 79 besitzt einen Eintrittsabschnitt 84 mit einem Durchmesser p und einen Drosselabschnitt 85 mit einem Durchmesser m, der deutlich kleiner als der Durchmesser p ist. Der Durchmesser m beträgt vorteilhaft weniger als die Hälfte des Durchmessers p. Der Eintrittsabschnitt 84 ist dabei am Außenumfang des Stutzens 65 angeordnet, und der Drosselabschnitt 85 mündet in den Innenraum 68 des Stutzens 65. Die zweite Dosieröffnung 80 ist gegenüber der ersten Dosieröffnung 79 um 90° um die Drehachse 29 versetzt benachbart zur ersten Dosieröffnung 79 angeordnet und besitzt einen Eintrittsabschnitt 84 mit einem Durchmesser q und einen Drosselabschnitt 85 mit einem Durchmesser n, der deutlich kleiner als der Durchmesser q ist, vorteilhaft weniger als 50 % des Durchmessers q beträgt.

Gegenüberliegend zur ersten Dosieröffnung 79 ist eine dritte Dosieröffnung 81 angeordnet, die einen Eintrittsabschnitt 84 mit einem Durchmesser r und einen Drosselabschnitt 85 mit einem Durchmesser o besitzt. Der Durchmesser r ist deutlich größer, vorteilhaft mindestens doppelt so groß wie der Durchmesser o. Alle Dosieröffnungen 79, 80 und 81 sind kreiszylindrisch als Bohrungen ausgeführt.

Zwischen der ersten Dosieröffnung 79 und der dritten Dosieröffnung 81 ist die Entleeröffnung 82 vorgesehen, die eine in Umfangsrichtung gemessene Breite s und eine parallel zur Drehachse 29 gemessene Höhe t besitzt. Die Entleeröffnung 82 besitzt einen rechteckigen Querschnitt. Der freie Strömungsquerschnitt der Entleeröffnung 82 ist deutlich größer als die Strömungsquerschnitte der Drosselabschnitte 85 der Dosieröffnungen 79 bis 81. Die Entleeröffnung 82 ist auch erheblich größer als die Eintrittsabschnitte 84 der Dosieröffnungen 79 bis 81.

Vorteilhaft beträgt der Durchmesser m des Drosselabschnitts 85 der ersten Dosieröffnung 79 etwa 0,5 mm, so dass sich ein Strömungsquerschnitt von etwa 0,2 mm² ergibt. Der Durchmesser n des Drosselabschnitts 85 der zweiten Dosieröffnung 80 beträgt vorteilhaft etwa 0,65 mm, so dass sich ein Strömungsquerschnitt von etwa 0,33 mm² ergibt. Der Drosselabschnitt 85 der dritten Dosieröffnung 81 besitzt einen Durchmesser o von vorteilhaft etwa 0,8 mm, so dass sich ein freier Strömungsquerschnitt von etwa 0,5 mm² ergibt. Die Entleeröffnung 82 besitzt einen freien Strömungsquerschnitt, der größer als 30 mm², vorteilhaft größer als 35 mm² ist. Damit beträgt der freie Strömungsquerschnitt der Entleeröffnung 82 mehr als das 60fache des freien Strömungsquerschnitts der größten Dosieröffnung 81 und mehr als das 150fache des Strömungsquerschnitts der kleinsten Dosieröffnung 81.

Durch Einstellen der Entleeröffnungen 42, 62, 82 lässt sich dadurch ein schnelles Entleeren des Sprühmittelbehälters 12 erreichen. Sprühmittel 19, das durch das Dosierventil 20 strömt, wird immer ins Blasrohr 10 zugeführt, unabhängig davon in welcher Stellung das Dosierelement 25, 55, 75 steht. Vorteilhaft stellt die jeweils eingestellte Dosieröffnung bzw. die Entleeröffnung den kleinsten Strömungsquerschnitt im Sprühmittelpfad vom Sprühmittelbehälter 12 bis zum Blasrohr 10 dar. Es kann jedoch auch vorgesehen sein, dass im Strömungsweg weitere Drosselstellen vorhanden sind, beispielsweise in der Sprühmittelpumpe 21 oder im Ventil 49. Trotz dieser weiteren Drosselstellen lässt sich durch Einstellen der Entleerstellung ein schnelleres Entleeren des Sprühmittelbehälters 12 erreichen.

## Patentansprüche

1. Sprühgerät mit einem Antriebsmotor (4), der einen Trägerluftstrom durch ein Blasrohr (10) fördert, und mit einem Sprühmittelbehälter (12), der über eine Sprühmittelleitung (19) mit einem Dosierventil (20) verbunden ist, wobei das Dosierventil (20) mehrere Dosieröffnungen (37, 38, 39, 40, 41, 59, 60, 61, 79, 80, 81) besitzt, die mit dem Inneren des Blasrohrs (10) verbunden sind und über die dem Trägerluftstrom Sprühmittel zugeführt wird, wobei die Dosieröffnungen (37, 38, 39, 40, 41, 59, 60, 61, 79, 80, 81) unterschiedliche Strömungsquerschnitte besitzen, **dadurch gekennzeichnet, dass** das Dosierventil (20) mindestens eine Entleeröffnung (42, 62, 82) aufweist, deren freier Strömungsquerschnitt deutlich größer als der Strömungsquerschnitt der größten Dosieröffnung (41, 61, 81) ist, wobei der Strömungsquerschnitt der Entleeröffnung (42, 62, 82) mindestens das 20 fache des Strömungsquerschnitts der kleinsten Dosieröffnung (37, 59, 79) beträgt, wobei die Strömungsquerschnitte der Dosieröffnungen (37, 38, 39, 40, 41, 59, 60, 61, 79, 80, 81) im Bereich von etwa 0,1 mm² bis etwa 15 mm² liegen und wobei die Entleeröffnung (42, 62, 82) einen Strömungsquerschnitt von mindestens 30 mm² besitzt.

2. Sprühgerät nach Anspruch 1, **dadurch gekennzeichnet, dass** der Strömungsquerschnitt der Entleeröffnung (42, 62, 82) mindestens das Doppelte des Strömungsquerschnitts der größten Dosieröffnung (41, 61, 81) beträgt.

3. Sprühgerät nach Anspruch 1 oder 2,
**dadurch gekennzeichnet, dass** die Entleeröffnung (42, 62, 82) mit dem Inneren des Blasrohrs (10) verbunden ist.

4. Sprühgerät nach einem der Ansprüche 1 bis 3,
**dadurch gekennzeichnet, dass** die Entleeröffnung (42, 62, 82) außerhalb des Blasrohrs ausmündet.

5. Sprühgerät nach einem der Ansprüche 1 bis 4,
**dadurch gekennzeichnet, dass** die Dosieröffnung (37, 38, 39, 40, 41, 59, 60, 61, 79, 80, 81) einen runden und die Entleeröffnung (42, 62, 82) einen rechteckigen Strömungsquerschnitt aufweist.

6. Sprühgerät nach einem der Ansprüche 1 bis 5,
**dadurch gekennzeichnet, dass** das Dosierventil (20) einen Stutzen (45, 65) aufweist, der in einer Aufnahme (27) des Dosierventils (20) drehbar gelagert ist und der mindestens eine Dosieröffnung (37, 38, 39, 40, 41, 59, 60, 61, 79, 80, 81) und mindestens eine Entleeröffnung (42, 62, 82) aufweist, wobei die Dosieröffnung (79, 80, 81) vorteilhaft einen Eintrittsabschnitt (84) mit einem vergrößerten Strömungsquerschnitt aufweist, wobei der Eintrittsabschnitt (84) insbesondere an den Außenumfang des Stutzens (65) angrenzt.

7. Sprühgerät nach Anspruch 6,
**dadurch gekennzeichnet, dass** die Sprühmittelleitung (19) mit einer Mündungsöffnung (28) am Außenumfang des Stutzens (45, 65) verbunden ist, wobei der Stutzen (45, 65) vorteilhaft hohl ausgebildet ist und das Innere des Stutzens (45, 65) insbesondere ins Innere des Blasrohrs (10) mündet.

8. Sprühgerät nach Anspruch 7,
**dadurch gekennzeichnet, dass** das Blasrohr (10) auf der Höhe des Dosierventils (20) eine Zuführrippe (31) aufweist, die sich quer zur Längsmittelachse (36) des Blasrohrs (10) durch das Blasrohr (10) erstreckt, wobei die Zuführrippe (31) vorteilhaft mindestens eine Zuführöffnung (33) aufweist, die mit dem Inneren des Stutzens (45, 65) verbunden ist und die ins Innere des Blasrohrs (10) mündet.

9. Sprühgerät nach Anspruch 8,
**dadurch gekennzeichnet, dass** im Bereich der Zuführrippe (31) mindestens eine Strömungsleitrippe (35) im Blasrohr (10) angeordnet ist, die sich etwa konzentrisch um die Längsmittelachse (36) des Blasrohrs (10) erstreckt.

10. Sprühgerät nach einem der Ansprüche 1 bis 9,
**dadurch gekennzeichnet, dass** das Dosierventil (20) benachbart zu einer Ausblasöffnung (32) aus dem Blasrohr (10) angeordnet ist.

11. Sprühgerät nach einem der Ansprüche 1 bis 10,
**dadurch gekennzeichnet, dass** am Blasrohr (10) ein Handgriff (11) angeordnet ist, der mindestens ein Bedienelement zum Bedienen des Sprühgeräts (1) aufweist, wobei vorteilhaft im Bereich des Handgriffs (11) in der Sprühmittelleitung (19) ein Ventil (49) angeordnet ist, mit dem die Zufuhr von Sprühmittel zu dem Dosierventil (20) unterbrochen werden kann.

12. Sprühgerät nach einem der Ansprüche 1 bis 11,
**dadurch gekennzeichnet, dass** in der Sprühmittelleitung (19) eine Sprühmittelpumpe (21) angeordnet ist, wobei die Sprühmittelpumpe (21) vorteilhaft von dem Antriebsmotor (4) des Sprühgeräts (1) angetrieben ist.

## Claims

1. Spray device with a drive motor (4) delivering a carrier air flow through a blow tube (10) and with a spray material reservoir (12) connected to a metering valve (20) via a spray material line (19), wherein the metering valve (20) has a plurality of metering orifices (37, 38, 39, 40, 41, 59, 60, 61, 79, 80, 81) which are connected to the blow tube (10) and via which spray material is added to the carrier air flow, the metering orifices (37, 38, 39, 40, 41, 59, 60, 61, 79, 80, 81) having different flow cross-sections,
**characterised in that** the metering valve (20) has at least one discharge orifice (42, 62, 82) with a free flow cross-section which is significantly larger than the flow cross-section of the largest metering orifice (41, 61, 81), wherein the flow cross-section of the discharge orifice (42, 62, 82) is at least 20 times the flow cross-section of the smallest metering orifice (37, 59, 79), wherein the flow cross-sections of the metering orifices (37, 38, 39, 40, 41, 59, 60, 61, 79, 80, 81) lie in the range of approximately 0.1 mm² to approximately 15 mm² and wherein the discharge orifice (42, 62, 82) has a flow cross-section of at least 30 mm².

2. Spray device according to claim 1,
**characterised in that** the flow cross-section of the discharge orifice (42, 62, 82) is at least twice the flow cross-section of the largest metering orifice (41, 61, 81).

3. Spray device according to claim 1 or 2,
**characterised in that** the discharge orifice (42, 62, 82) is connected to the interior of the blow tube (10).

4. Spray device according to any of claims 1 to 3,
**characterised in that** the discharge orifice (42, 62, 82) terminates outside the blow tube.

5. Spray device according to any of claims 1 to 4,
**characterised in that** the metering orifice (37, 38, 39, 40, 41, 59, 60, 61, 79, 80, 81) has a circular flow cross-section and the discharge orifice (42, 62, 82) has a rectangular flow cross-section.

6. Spray device according to any of claims 1 to 5,
**characterised in that** the metering valve (20) has a connecting piece (45, 65) which is rotatably installed into a location of the metering valve (2) and which has at least one metering orifice (37, 38, 39, 40, 41, 59, 60, 61, 79, 80, 81) and at least one discharge orifice (42, 62, 82), wherein the metering orifice (79, 80, 81) advantageously comprises an inlet section (84) with an increased flow cross-section, the inlet section (84) in particular adjoining the outer circumference of the connecting piece (65).

7. Spray device according to claim 6,
**characterised in that** the spray material line (19) is connected to a termination opening (28) on the outer circumference of the connecting piece (45, 65), the connecting piece (45, 65) being advantageously designed hollow and the interior of the connecting piece (45, 65) in particular terminating into the interior of the blow tube (10).

8. Spray device according to claim 7,
**characterised in that** the blow tube (10) comprises at the level of the metering valve (20) a feed rib (31) which extends through the blow tube (10) at right angles to the longitudinal central axis (36) of the blow tube (10), the feed rib (31) advantageously having at least one feed opening (33) which is connected to the interior of the connecting piece (45, 65) and which terminates into the interior of the blow tube (10).

9. Spray device according to claim 8,
**characterised in that** at least one flow guidance rib (35) extending approximately concentrically around the longitudinal central axis (36) of the blow tube (10) is provided in the blow tube (10) in the region of the feed rib (31).

10. Spray device according to any of claims 1 to 9,
**characterised in that** the metering valve (20) is located adjacent to a blow-out opening (32) of the blow tube (10).

11. Spray device according to any of claims 1 to 10,
**characterised in that** a handle (11) comprising at least one control for the operation of the spray device (1) is provided on the blow tube (10), wherein a valve (49) by means of which the supply of spray material to the metering valve (10) can be interrupted is advantageously provided in the region of the handle (11).

12. Spray device according to any of claims 1 to 11,
**characterised in that** a spray material pump (21) is provided in the spray material line (19), the spray material pump (21) being advantageously driven by the drive motor (4) of the spray device (1).

## Revendications

1. Pulvérisateur avec un moteur d'entraînement (4) qui fait passer un courant d'air porteur à travers une lance de soufflage (10), et avec un récipient pour produit à pulvériser (12) qui est relié par un conduit de produit à pulvériser (19) à une soupape de dosage (20), la soupape de dosage (20) ayant plusieurs ouvertures de dosage (37, 38, 39, 40, 41, 59, 60, 61, 79, 80, 81) qui sont reliées à l'intérieur de la lance de soufflage (10) et par lesquelles le produit à pulvériser est amené dans le courant d'air porteur, et les ouvertures de dosage (37, 38, 39, 40, 41, 59, 60, 61, 79, 80, 81) ayant des sections transversales d'écoulement différentes,
**caractérisé en ce que** la soupape de dosage (20) présente au moins une ouverture d'évacuation (42, 62, 82) dont la section de passage libre est nettement plus grande que la section de passage de la plus grande ouverture de dosage (41, 61, 81), là section de passage de l'ouverture d'évacuation (42, 62, 82) étant au moins 20 fois supérieure à la section de passage de la plus petite ouverture de dosage (37, 59, 79), les sections transversales d'écoulement des ouvertures de dosage (37, 38, 39, 40, 41, 59, 60, 61, 79, 80, 81) étant situées dans la plage d'environ 0,1 mm² à environ 15 mm², et l'ouverture d'évacuation (42, 62, 82) ayant une section de passage d'au moins 30 mm²_{.}

2. Pulvérisateur selon la revendication 1,
**caractérisé en ce que** la section de passage de l'ouverture d'évacuation (42, 62, 82) est au moins deux fois supérieure à la section d'écoulement de la plus grande ouverture de dosage (41, 61, 81).

3. Pulvérisateur selon la revendication 1 ou 2,
**caractérisé en ce que** l'ouverture d'évacuation (42, 62, 82) est reliée à l'intérieur de la lance de soufflage (10).

4. Pulvérisateur selon l'une des revendications 1 à 3,
**caractérisé en ce que** l'ouverture d'évacuation (42, 62, 82) débouche à l'extérieur de la lance de soufflage.

5. Pulvérisateur selon l'une des revendications 1 à 4,
**caractérisé en ce que** l'ouverture de dosage (37, 38, 39, 40, 41, 59, 60, 61, 79, 80, 81) présente une section de passage ronde, et l'ouverture d'évacuation (42, 62, 82) une section de passage rectangulaire.

6. Pulvérisateur selon l'une des revendications 1 à 5,
**caractérisé en ce que** la soupape de dosage (20) présente une tubulure (45, 65) qui est montée en rotation dans un logement (27) de ladite soupape de dosage (20) et qui présente au moins une ouverture de dosage (37, 38, 39, 40, 41, 59, 60, 61, 79, 80, 81) et au moins une ouverture d'évacuation (42, 62, 82), l'ouverture de dosage (79, 80, 81) présentant avantageusement un tronçon d'entrée (84) avec une section de passage agrandie, et le tronçon d'entrée (84) avoisinant en particulier la circonférence extérieure de la tubulure (65).

7. Pulvérisateur selon la revendication 6,
**caractérisé en ce que** le conduit pour produit à pulvériser (19) est relié à une ouverture formant embouchure (28), sur la circonférence de la tubulure (45, 65), la tubulure (45, 65) étant avantageusement creuse et l'intérieur de la tubulure (45, 65) débouchant en particulier à l'intérieur de la lance de soufflage (10).

8. Pulvérisateur selon la revendication 7,
**caractérisé en ce que** la lance de soufflage (10) présente à la hauteur de la soupape de dosage (20) une ailette d'amenée (31) qui s'étend à travers la lance de soufflage (10) transversalement par rapport à l'axe longitudinal médian (36) de celle-ci, l'ailette d'amenée (31) présentant avantageusement au moins une ouverture d'amenée (33) qui est reliée à l'intérieur de la tubulure (45, 65) et qui débouche à l'intérieur de la lance de soufflage (10).

9. Pulvérisateur selon la revendication 8,
**caractérisé en ce qu'**il est prévu dans la zone de l'ailette d'amenée (31), dans la lance de soufflage (10), au moins une ailette de guidage d'écoulement (35) qui s'étend à peu près concentriquement autour de l'axe longitudinal médian (36) de la lance de soufflage (10).

10. Pulvérisateur selon l'une des revendications 1 à 9,
**caractérisé en ce que** la soupape de dosage (20) est disposée près d'une ouverture de sortie (32) de la lance de soufflage (10).

11. Pulvérisateur selon l'une des revendications 1 à 10,
**caractérisé en ce qu'**il est prévu sur la lance de soufflage (10) une poignée (11) qui présente au moins un élément d'actionnement pour actionner le pulvérisateur (1), étant précisé qu'il est prévu avantageusement dans la zone de la poignée (11), dans le conduit pour produit à pulvériser (19), une soupape (49) grâce à laquelle l'amenée de produit à pulvériser vers la soupape de dosage (20) peut être interrompue.

12. Pulvérisateur selon l'une des revendications 1 à 11,
**caractérisé en ce qu'**il est prévu dans le conduit pour produit à pulvériser (19) une pompe pour produit à pulvériser (21), ladite pompe (21) étant avantageusement entraînée par le moteur d'entraînement (4) du pulvérisateur (1).
